# EUROPÄISCHE PATENTSCHRIFT

(11) **EP 2 428 676 B1**
(45) Veröffentlichungstag und Bekanntmachung des Hinweises auf die Patenterteilung: **15.07.2015**
(21) Anmeldenummer: 11007376.4
(22) Anmeldetag: 09.09.2011
(51) Int. Cl.: F03D 1/00, F03D 11/00, F16B 5/00

(54) **Verkleidung für eine Gondel einer Windenenergieanlage**
Cover panels for a nacelle of a wind turbine
Revêtement pour une nacelle d'une éolienne

(30) Priorität: 11.09.2010 DE 102010045139
(43) Veröffentlichungstag der Anmeldung: 14.03.2012
(73) Patentinhaber: Nordex Energy GmbH, 22419 Hamburg (DE)
(72) Erfinder: Wackrow, Torsten, 18055 Rostock (DE)
(74) Vertreter: Hauck Patentanwaltspartnerschaft mbB

(56) Entgegenhaltungen:
- WO-A2-2007/132408
- WO-A2-2007/132408
- DE-A1- 10 124 268
- GB-A- 2 143 000
- GB-A- 2 143 000

## Beschreibung

Die vorliegende Erfindung betrifft eine Verkleidung für ein Maschinenhaus einer Windenergieanlage.

Aus Erich Hau "Windkraftanlagen", 3. Auflage, Kapitel 8.11 ist bekannt, ein Maschinenhaus mit einer tragenden Bodenplattform und einer aufgesetzten nichttragenden Verkleidung zu versehen. Für die nichttragende Verkleidungsstruktur des Maschinenhauses werden durch Profilstäbe versteifte Aluminium- oder Stahlblechkonstruktionen oder alternativ laminierte Schalen aus glasfaserverstärktem Verbundmaterial eingesetzt. Als Gesichtspunkt für die Auswahl des Materials und die Bauweise wird besonders auf eine Isolierung gegen Schall und Temperatur hingewiesen. Neben dem Aspekt der Schallisolierung ist auch die mechanische Stabilität der nichttragenden Verkleidung ein wichtiger Aspekt.

Eine Verkleidung für das Maschinenhaus schützt die Komponenten im Inneren des Maschinenhauses gegen äußere Einflüsse, wie Regen, Wind, Sand, Schnee und Sonneneinstrahlung. Nach außen schirmt die Verkleidung gegen Schall ab, ermöglicht in klimatisch kalten Gebieten das Erwärmen der Innenluft und sichert das Personal in großer Höhe bei Wartungsarbeiten. Die Verkleidung der Windenergieanlage ist großen Wind- und Verkehrslasten mit hohen Flächendrücken ausgesetzt und muss einen ausreichend hohen Dichtheitsgrad gegen Regen, Schnee, Eis und Sand aufweisen. Weiterhin muss sie flexibel und gleichzeitig stark genug sein, um Lasten, resultierend aus den hohen Flächendrücken, Temperaturschrumpfungen, Vorformungen des Maschinenhauses und aus dem Betrieb der Anlage, aufnehmen zu können.

Aus WO 2007/132408 A2 ist eine Gondel für eine Windenergieanlage bekannt geworden, bei der plattenförmige Elemente eine Verkleidung für die Gondel bilden, wobei die Elemente in Umfangsrichtung jeweils einen überlappenden Bereich besitzen, in dem ein Vorsprung eines Verkleidungsteiles in einer Ausnehmung des benachbarten Verkleidungsteiles angeordnet ist.

Der Erfindung liegt die Aufgabe zugrunde, eine verbesserte Verkleidung für das Maschinenhaus einer Windenergieanlage bereitzustellen, die eine flexible Aufnahme von Zwangskräften und großen Verformungen ohne Beschädigung der Verkleidung ermöglicht.

Erfindungsgemäß wird die Aufgabe durch eine Verkleidung mit den Merkmalen aus Anspruch 1 gelöst. Vorteilhafte Ausgestaltungen bilden den Gegenstand der Unteransprüche.

Die erfindungsgemäße Verkleidung ist für ein Maschinenhaus einer Windenergieanlage vorgesehen. Die Verkleidung weist eine Vielzahl von Verkleidungsteilen auf, die paarweise in Längsrichtung des Maschinenhauses hintereinander angeordnet sind. Die Längsrichtung des Maschinenhauses ist die Richtung, in die sich das Maschinenhaus senkrecht zu der von den Rotorblättern der Windenergieanlage aufgespannten Ebene erstreckt. Bei der erfindungsgemäßen Verkleidung werden in Längsrichtung benachbarte Paare von Verkleidungsteilen überlappend angeordnet. Die Verkleidung besteht somit aus mehreren in Längsrichtung hintereinander angeordneten Paaren von Verkleidungsteilen. In den überlappenden Bereichen zwischen benachbarten Paaren von Verkleidungsteilen ist jedes Paar an einem Ende innerhalb eines ersten benachbarten Paares und an seinem gegenüberliegenden Ende außerhalb eines zweiten benachbarten Paares angeordnet. Die Begriffe "innerhalb" und "außerhalb" beziehen sich auf das Maschinenhaus, wobei das innerhalb des benachbarten Paars angeordnete Ende näher zum Inneren des Maschinenhauses angeordnet ist als das außerhalb angeordnete Ende. Die Überlappung der Paare von Verkleidungsteilen in Längsrichtung erfolgt nach dem Dachziegelprinzip. Dabei überlappen die in der Betriebsposition der Windenergieanlage dem Wind zugewandten Verkleidungsteile die dem Wind abgewandten Verkleidungsteile. Die erfindungsgemäße Verkleidung bietet die Möglichkeit, mit kleineren Verkleidungsteilen zu arbeiten, wodurch die Auslegung der Verkleidungsteile besser an die zu erwartenden Deformationen und Flächendrücke an dem Maschinenhaus angepasst werden kann. Die Länge der Verkleidungsteile richtet sich nach Anforderungen bei der Transportierbarkeit und der angestrebten Wirtschaftlichkeit. Die Anzahl der Verkleidungsteile ergibt sich aus der Länge des Maschinenhauses. Erfindungsgemäß weisen die Verkleidungsteile jeweils eine Grundplatte und zwei einander gegenüberliegende Seitenwände auf. Jedes Verkleidungsteil umschließt das Maschinenhaus in einem vorgegebenen Winkelbereich bezogen auf die Längsachse des Maschinenhauses. Nach Verbindung der Seitenwände umschließen die Verkleidungsteile das Maschinenhaus vollständig.

In einer bevorzugten Ausgestaltung werden zwei benachbarte Paare von Verkleidungsteilen gemeinsam durch Befestigungsmittel an einem Tragrahmen des Maschinenhauses befestigt. Die Verkleidung ist als nichttragende Verkleidung ausgebildet und wird an einem Tragrahmen des Maschinenhauses befestigt. Als Befestigungsmittel für die erfindungsgemäßen Verkleidungsteile wird bevorzugt eine Bolzenverbindung, insbesondere eine Schraubenverbindung eingesetzt.

In einer bevorzugten Ausgestaltung ist das im überlappenden Bereich innen liegende Verkleidungsteil mit einem sich in Längsrichtung erstreckenden Langloch oder einer Ausnehmung zur Aufnahme des Befestigungsteils ausgestattet. Ebenfalls bevorzugt ist das im überlappenden Bereich außen liegende Verkleidungsteil mit einer Bohrung zur Aufnahme des Befestigungsmittels ausgestattet. In dem überlappenden Bereich zwischen zwei benachbarten Verkleidungsteilen wird eines der Verkleidungsteile mit dem Befestigungsmittel, das durch die Bohrung geführt ist, in seiner Position an dem Tragrahmen des Maschinenhauses befestigt. Das zweite Verkleidungsteil, bei dem das Befestigungsmittel durch ein sich in Längsrichtung erstreckendes Langloch oder eine sich in Längsrichtung erstreckende Ausnehmung erstreckt, ist ebenfalls in seiner Position festgelegt, besitzt jedoch in Längsrichtung Spiel. Dadurch können sich die Verkleidungsteile im Bereich der Überlappung gegeneinander verschieben, was dem Auftreten von Zwangskräften an der Verkleidung entgegenwirkt. Grundsätzlich ist es auch möglich, dass das innen liegende Verkleidungsteil mit einer Bohrung und das außen liegende Verkleidungsteil mit einem Langloch oder einer Ausnehmung versehen sind. Bevorzugt wird aus Dichtigkeitsgründen aber eine Ausgestaltung gewählt, bei der das außen liegende Verkleidungsteil eine Bohrung zur Aufnahme des Befestigungsmittels aufweist und somit in seiner Position festgelegt ist.

In einer zweckmäßigen Ausgestaltung ist jeweils die Grundplatte der Verkleidungshälfte im überlappenden Bereich an dem Tragrahmen des Maschinenhauses befestigt.

Bevorzugt werden die Seitenwände eines Paares von Verkleidungsteilen formschlüssig miteinander verbunden. Der Formschluss der Seitenwände von zwei Verkleidungsteilen kann über eine Ausnehmung und einen korrespondierenden Vorsprung erfolgen. Denkbar sind auch ineinandergreifende Fugen, Schlitze oder Nuten an den Seitenwänden der Verkleidungsteile.

In einer die Montage besonders erleichternden Ausgestaltung ist die formschlüssige Verbindung der Seitenwände der Verkleidungsteile so ausgebildet, dass sie sich über die gesamte Länge der Verkleidungsteile erstreckt. Auf diese Weise wird sichergestellt, dass die Verkleidungsteile in Längsrichtung gegeneinander verschiebbar sind, solange die Verkleidungsteile noch nicht an dem Tragrahmen des Maschinenhauses befestigt sind.

In einer besonders bevorzugten Ausgestaltung ist jedes Paar von Verkleidungsteilen aus zwei gleichen Verkleidungshälften zusammengesetzt. Die Verkleidungshälften gemeinsam umschließen das Maschinenhaus vollständig, so dass insgesamt eine geschlossene, nichttragende Verkleidung für das Maschinenhaus entsteht. Da es sich um gleiche Teile handelt, besitzt eine Seitenwand der Verkleidungshälfte eine Ausnehmung und die gegenüberliegende Seitenwand der Verkleidungshälfte einen mit der Ausnehmung korrespondierenden Vorsprung, so dass beim Zusammensetzen von zwei Verkleidungshälften die Seitenwände formschlüssig durch Vorsprung und Ausnehmung nach Art einer Nut-Feder-Verbindung miteinander verbunden sind. Durch die Verwendung von gleich gestalteten Verkleidungshälften können die Herstellungskosten gesenkt werden. Besondere Vorteile entstehen auch bei der Montage der Paare von Verkleidungshälften, da nicht auf eine Orientierung oder besondere Ausgestaltung der Verkleidungshälften geachtet werden muss. Bei einer zylindrischen oder quaderförmigen Gestalt des Maschinenhauses ist es auch möglich, alle Verkleidungsteile gleich zu gestalten. Dann kann jedes Verkleidungsteil in jeder Position an dem Maschinenhaus montiert werden.

In einer weiteren Ausgestaltung sind die Verkleidungsteile ähnlich formgleich ausgebildet, so dass sie die gleiche Konstruktion besitzen, sich aber hinsichtlich ihrer Abmessungen unterscheiden können. Bei einem beispielsweise konisch gestalteten Maschinenhaus sind die Verkleidungsteile derart gestaltet, dass der Querschnitt der Paare sich über die Länge des Maschinenhauses verringert. Alternativ können die Verkleidungsteile auch als Gleichteile ausgebildet sein.

Als Material wird bevorzugt ein faserverstärkter Verbundwerkstoff, insbesondere ein glasfaserverstärktes Verbundmaterial eingesetzt.

Ein Ausführungsbeispiel der Erfindung wird nachfolgend anhand der Figuren näher erläutert. Es zeigt:
- Fig. 1: einen Tragrahmen des Maschinenhauses einer Windenergieanlage mit einem Paar von Verkleidungsteilen in einer perspektivischen Ansicht,
- Fig. 2: den Tragrahmen des Maschinenhauses aus Fig. 1 mit fünf Paaren von Verkleidungsteilen in einer perspektivischen Ansicht,
- Fig. 3: den Tragrahmen aus Fig. 1 mit fünf Paaren von Verkleidungsteilen in einer auseinandergezogenen perspektivischen Ansicht,
- Fig. 4: eine Detailansicht der einander überlappenden Bereiche der Verkleidungsteile,
- Fig. 5: einen Blick in das Maschinenhaus mit fertig montierter Verkleidung in einer perspektivischen Ansicht,
- Fig. 6: die Verbindung von zwei einander überlappenden Verkleidungshälften mit ihrer Befestigung in einer Schnittansicht und
- Fig. 7: einen Querschnitt in Längsrichtung durch das verkleidete Maschinenhaus.

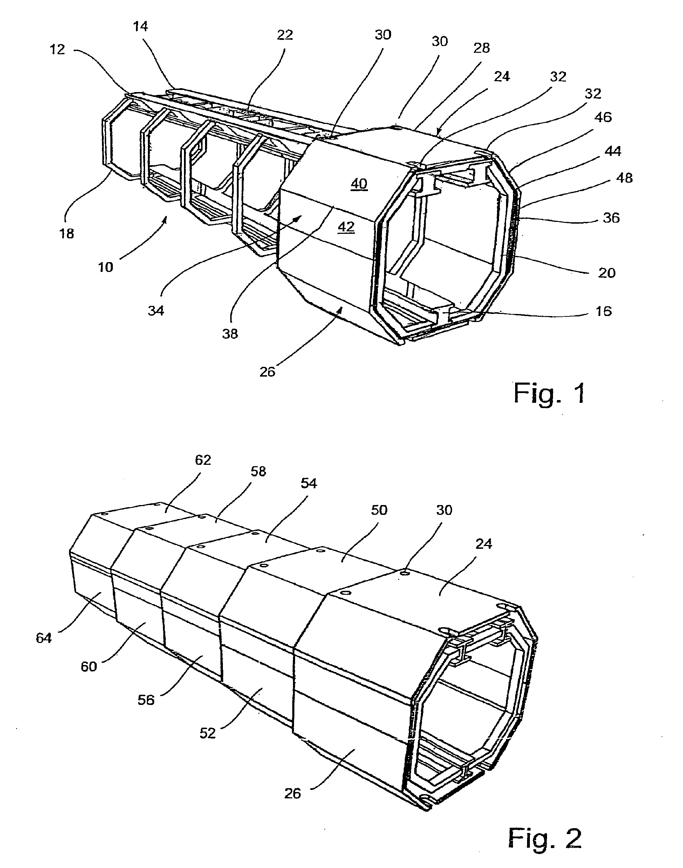

Fig. 1 zeigt in einer perspektivischen Ansicht einen Tragrahmen 10 für das Maschinenhaus einer Windenergieanlage. Der Tragrahmen 10 besitzt an seiner Oberseite zwei parallel zueinander verlaufende Doppel-T-Träger 12, 14 und auf der gegenüberliegenden unteren Seite einen Doppel-T-Träger 16. Die Träger 12, 14, 16 erstrecken sich in Längsrichtung des Maschinenhauses und sind jeweils paarweise parallel zueinander angeordnet. Der Doppel-T-Träger 12 ist über Rippen 18 mit dem unteren Doppel-T-Träger 16 verbunden. Die Rippen 18 sind beabstandet voneinander in Längsrichtung der Träger angeordnet. Der zweite obere Träger 14 ist ebenfalls über Rippen 20 mit dem unteren Träger 16 verbunden. Die beiden oberen Träger 12 und 14 sind untereinander über Querverbindungen 22 miteinander verbunden. Die Rippen 18 und 20 sowie die Querverbindungen 22 begrenzen insgesamt den Innenraum des Maschinenhauses. In der dargestellten Ausführungsform besitzt das Maschinenhaus einen achteckigen Querschnitt.

Im Inneren der Tragkonstruktion 10 kann ein Maschinenträger (nicht dargestellt) zur Aufnahme des Generators der Rotorwelle vorgesehen sein. Alternativ zu der dargestellten Ausführungsform ist es ebenfalls möglich, statt des unteren Doppel-T-Trägers 16 die die oberen Träger 12, 14 haltenden Rippen 18 an den Maschinenträger anzusetzen, um so eine geschlossene Tragkonstruktion für die nichttragende Verkleidung des Maschinenhauses zu bilden.

Fig. 1 zeigt ein Paar von Verkleidungsteilen 24 und 26. Die Verkleidungsteile 24 und 26 sind im dargestellten Ausführungsbeispiel als gleich große Teile ausgebildet, so dass im nachfolgenden Text von Verkleidungshälften gesprochen und bei der Beschreibung auf die obere Verkleidungshälfte 24 abgestellt wird. Die Verkleidungshälfte 24 besitzt eine Grundplatte 28, die an einem Ende mit einem Paar von Bohrungen 30 ausgestattet ist. An dem in Längsrichtung gegenüberliegenden Ende der Grundplatte 28 besitzt diese zwei zum Rand der Grundplatte 28 offene Ausnehmungen 32. Die Ausnehmungen 32 erstrecken sich in Längsrichtung des Maschinenhauses.

An die Grundplatte 28 schließen sich seitlich zwei einander gegenüberliegende Seitenwände 34 und 36 an. Die Seitenwände 34 und 36 folgen in ihrer Form der durch die Rippen 18 und 20 vorgegebenen Form. In dem dargestellten Ausführungsbeispiel in Fig. 1 besitzt die Seitenwand 34 einen Knick 38, der die Seitenwand 34 in einem oberen Abschnitt 40 und einen unteren Abschnitt 42 unterteilt. Die Seitenwand 36 ist ebenfalls entlang eines sich in Längsrichtung erstreckenden Knicks 44 in einen oberen Abschnitt 46 und einen unteren Abschnitt 48 unterteilt. Die unteren Abschnitte 42 und 48 stehen dabei senkrecht zu der Grundplatte 28.

Die Verkleidungshälften 24 und 26 bilden eine geschlossene, nichttragende Verkleidung für das Maschinenhaus.

Fig. 2 zeigt das vollständig verkleidete Maschinenhaus, bei dem Verkleidungshälften 24, 50, 54, 58, 62 die obere Verkleidung und die Verkleidungshälften 26, 52, 56, 60, 64 die untere Verkleidung bilden. Wie in Fig. 2 deutlich zu erkennen, ist die Verkleidungshälfte 24 teilweise überlappend mit der Verkleidungshälfte 50 angeordnet. In dem Überlappungsbereich liegt die Verkleidungshälfte 24 außen und die Verkleidungshälfte 50 innen. Ebenso liegt die Verkleidungshälfte 50 oberhalb der Verkleidungshälfte 54, so dass die Verkleidungshälfte 50 somit an dem zur Verkleidungshälfte 24 weisenden Ende innerhalb und an dem zur Verkleidungshälfte 54 angeordneten Ende außerhalb angeordnet ist. Die Anordnung der unteren Verkleidungshälften 26, 52, 56, 60, 64 verhält sich entsprechend der Anordnung der oberen Verkleidungshälften, so dass, wenn im Überlappbereich zwischen zwei aneinander grenzenden Verkleidungshälften die obere Verkleidungshälfte außerhalb angeordnet ist, die untere Verkleidungshälfte ebenfalls außerhalb angeordnet ist. In Fig. 2 ist ebenfalls deutlich zu erkennen, dass die Bohrungen 30 der Verkleidungshälften jeweils außen liegen, während die Ausnehmungen 32 der Verkleidungshälften in dem überlappenden Bereich jeweils innen liegend angeordnet sind.

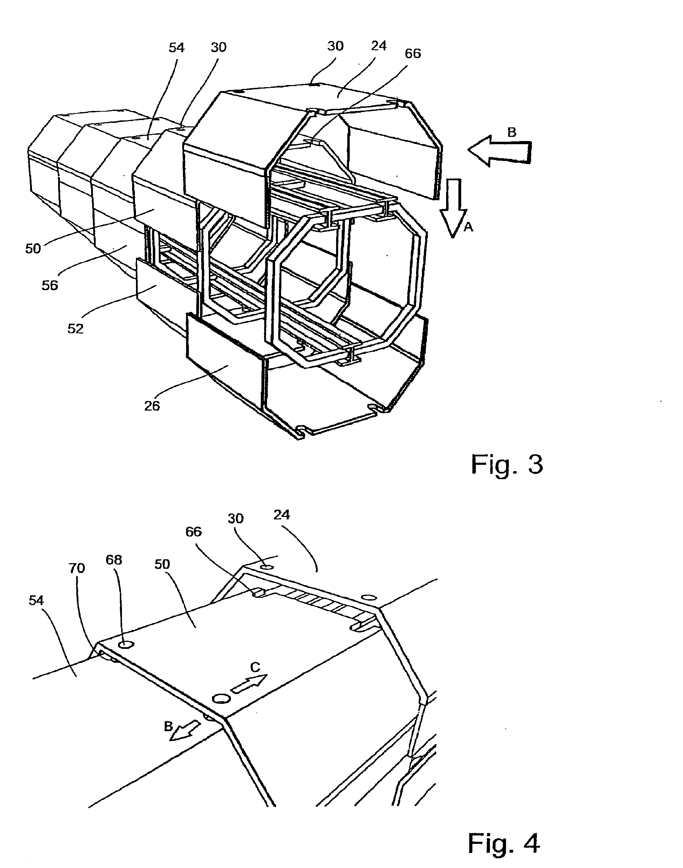

Fig. 3 zeigt in einer perspektivischen Ansicht den Zusammenbau der Verkleidung aus den Verkleidungshälften. In Fig. 3 sind die Verkleidungshälften 54 und 56 bereits montiert. In einem nachfolgenden Schritt werden die Verkleidungshälften 50 und 52 aufgesetzt. Hierbei werden die Verkleidungshälften in Richtung des Pfeils A mit ihren unteren Seitenwandabschnitten aufeinander gesetzt und in Richtung des Pfeils B bewegt, so dass die Bohrungen 30 sich oberhalb der Ausnehmungen in den Verkleidungshälften 54 und 56 befinden. In einem nachfolgenden Schritt, nachdem die Verkleidungshälften 50 und 52 in einer nachfolgend beschriebenen Weise mit dem Tragrahmen verbunden sind, werden die Verkleidungshälften 24 und 26 aufgesetzt. Die Verkleidungshälften 24, 26 werden entlang der Richtung A aufeinander zu bewegt, so dass die Seitenwände der Verkleidungshälften entlang ihrer Kante aufeinander stehen. Entlang der Bewegungsrichtung B werden die Verkleidungshälften 24 und 26 bewegt, so dass die Bohrungen 30 sich oberhalb der Ausnehmungen 66 der Verkleidungshälfte 50 befinden.

Über die Bohrungen 30 erfolgt die Befestigung der Verkleidungshälfte 24 an dem Tragrahmen.

Fig. 4 zeigt eine Detailansicht der Fig. 3 aus einer anderen Perspektive. Die Verkleidungshälfte 50 ist dabei außerhalb der Verkleidungshälfte 54 angeordnet und mit ihrem gegenüberliegenden Ende innerhalb der Verkleidungshälfte 24. Durch eine Bewegung der Verkleidungshälften entlang der Richtungen B und C können diese so ausgerichtet werden, dass sich die Bohrungen 68 der Verkleidungshälfte 50 oberhalb der Ausnehmung 70 der Verkleidungshälften 54 befinden. Gleichzeitig kann durch eine Bewegung entlang der Richtungen B und C die Verkleidungshälfte 24 so angepasst werden, dass die Bohrung 30 der Verkleidungshälfte 24 sich oberhalb der Ausnehmung 66 der Verkleidungshälfte 50 befindet.

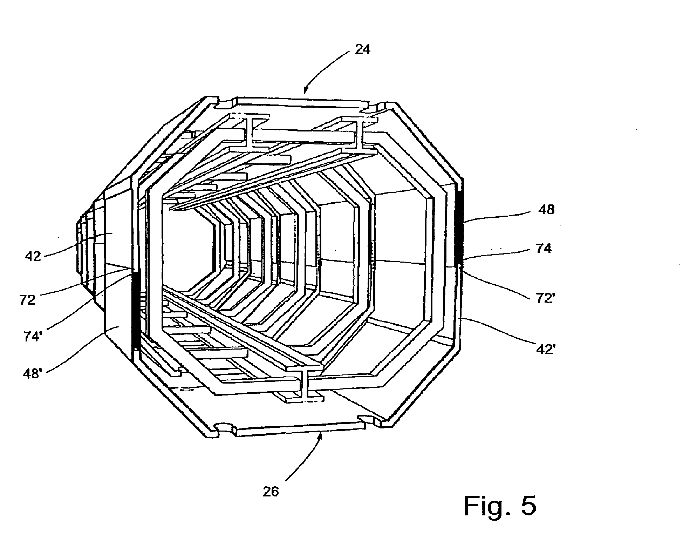

Fig. 5 zeigt in einer perspektivischen Innenansicht die geschlossene Verkleidung des Maschinenhauses. In Fig. 5 ist zu erkennen, dass die untere Seitenwand 42 der Verkleidungshälfte 24 entlang ihrer Kante einen Vorsprung 72 besitzt. Die gegenüberliegende untere Seitenwand 48 besitzt an ihrem Stoß eine Ausnehmung 74. Berücksichtigt man, dass die korrespondierende Verkleidungshälfte 26 als gleiches Teil aufgebaut ist, so besitzt deren untere Seitenwand 48' eine Ausnehmung 74', in die der Vorsprung 72 eintaucht. Ebenso besitzt die untere Seitenwand 42' einen Vorsprung 72', der in die Ausnehmung 74 eintaucht. Auf diese Weise wird eine auf Querkräfte hin belastbare formschlüssige Verbindung zwischen den Verkleidungshälften 24 und 26 hergestellt.

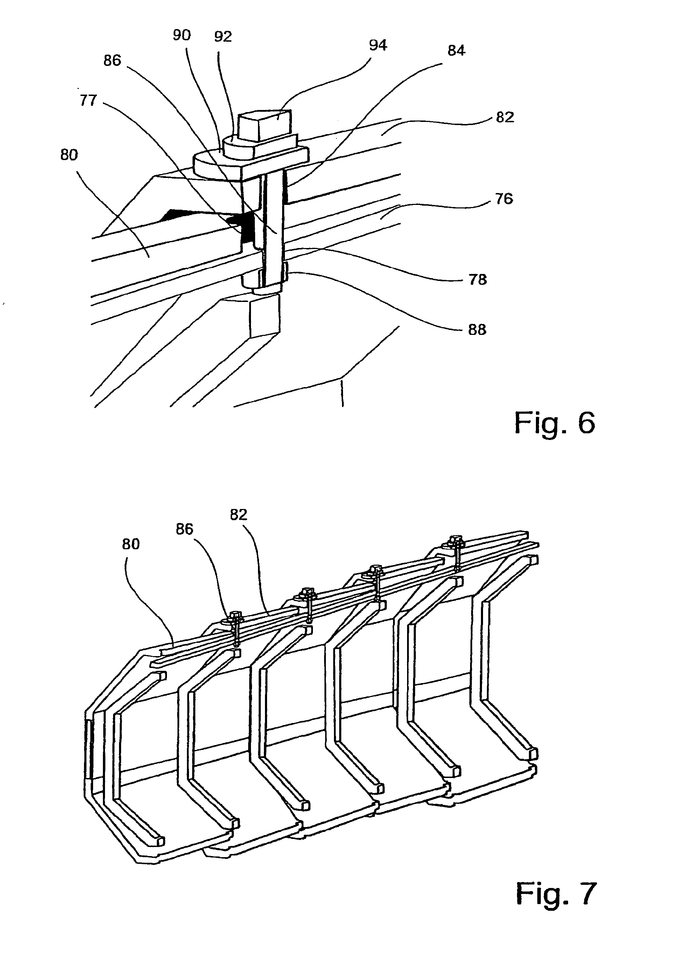

Fig. 6 zeigt die Befestigung der Verkleidung an dem Tragrahmen mit Hilfe einer Bolzenverbindung. In der Schnittzeichnung dargestellt ist ein Abschnitt 76 eines Tragrahmens, der eine Bohrung 78 besitzt. Auf dem Abschnitt des Tragrahmens 76 liegt die innen liegende Verkleidungshälfte 80 mit ihrer Ausnehmung 77 auf. Außerhalb der Verkleidungshälfte ist überlappend eine zweite Verkleidungshälfte 82 angeordnet, deren Bohrung 84 fluchtend mit der Bohrung 78 angeordnet ist. Durch die Bohrung 84 ist eine Schraube 86 mit einem Schraubenkopf 94 geführt. Auf der Innenseite des Trägerabschnitts 76 wird die Schraube 86 über eine Mutter 88 gesichert. Für eine gute Krafteinleitung in die außen liegende Verkleidungshälfte ist ein Paar von Unterlegscheiben 90, 92 vorgesehen. Das Verkleidungsteil 80 wird an seinen innen liegenden Ende nur kraftschlüssig durch den Druck der außen liegenden Verkleidungshälfte gesichert.

Fig. 7 zeigt einen Schnitt durch das vollständig verkleidete Maschinenhaus, bei dem die Verkleidungsteile 80, 82 durch die Schrauben 86 an einem Abschnitt 76 eines Trägers befestigt sind. Wie in Fig. 7 zu erkennen, ergibt sich insgesamt eine schuppenartige Trägerkonstruktion.

## Patentansprüche

1. Verkleidung für ein Maschinenhaus einer Windenergieanlage, die eine Vielzahl von Verkleidungsteilen (24) aufweist, die paarweise in Längsrichtung des Maschinenhauses hintereinander angeordnet sind, wobei in Längsrichtung benachbarte Paare von Verkleidungsteilen überlappend derart angeordnet sind, dass jedes Paar an einem Ende innerhalb eines ersten benachbarten Paares und an seinem gegenüberliegenden Ende außerhalb eines zweiten benachbarten Paares angeordnet ist, **dadurch gekennzeichnet, dass** die Verkleidungsteile eine Grundplatte (28) und zwei einander gegenüber angeordnete Seitenwände (34, 36) aufweisen.

2. Verkleidung nach Anspruch 1, **dadurch gekennzeichnet, dass** zwei benachbarte Paare von Verkleidungsteilen gemeinsam durch Befestigungsmittel (86) an einem Tragrahmen (76) des Maschinenhauses befestigt sind.

3. Verkleidung nach Anspruch 2, **dadurch gekennzeichnet, dass** das im überlappenden Bereich innen liegende Verkleidungsteil ein sich in Längsrichtung erstreckendes Langloch oder eine Ausnehmung (66) zur Aufnahme des Befestigungsmittels aufweist.

4. Verkleidung nach Anspruch 2 oder 3, **dadurch gekennzeichnet, dass** das im überlappenden Bereich außen liegende Verkleidungsteil eine Bohrung zur Aufnahme des Befestigungsmittels aufweist.

5. Verkleidung nach Anspruch 1, **dadurch gekennzeichnet, dass** die Grundplatte (28) im überlappenden Bereich an dem Tragrahmen des Maschinenhauses befestigt ist.

6. Verkleidung nach Anspruch 1 oder 5, **dadurch gekennzeichnet, dass** die Seitenwände eines Paares von Verkleidungsteilen formschlüssig miteinander verbunden sind.

7. Verkleidung nach Anspruch 6, **dadurch gekennzeichnet, dass** die formschlüssige Verbindung der Seitenwände eines Paares von Verkleidungsteilen (24, 26) sich über die gesamte Länge der Seitenteile erstreckt und derart ausgebildet ist, dass die Verkleidungsteile in Längsrichtung gegeneinander verschiebbar verbunden sind.

8. Verkleidung nach einem der Ansprüche 1 bis 7, **dadurch gekennzeichnet, dass** jedes Paar von Verkleidungsteilen aus zwei gleichen Verkleidungshälften besteht.

9. Verkleidung nach Anspruch 8, **dadurch gekennzeichnet, dass** eine Seitenwand einer Verkleidungshälfte eine Ausnehmung (74) und die gegenüberliegende Seitenwand der Verkleidungshälfte einen mit der Ausnehmung korrespondierenden Vorsprung (72') aufweist, derart, dass für ein Paar von Verkleidungshälften die Seitenwände formschlüssig miteinander verbunden sind.

10. Verkleidung nach einem der Ansprüche 1 bis 9, **dadurch gekennzeichnet, dass** die Verkleidungsteile ähnlich formgleich sind.

11. Verkleidung nach einem der Ansprüche 1 bis 9, **dadurch gekennzeichnet, dass** die Verkleidungsteile als Gleichteile ausgebildet sind.

12. Verkleidung nach einem der Ansprüche 1 bis 11, **dadurch gekennzeichnet, dass** die Verkleidungsteile aus einem faserverstärkten Verbundwerkstoff bestehen.

## Claims

1. A sheathing for a nacelle of a wind turbine which comprises a plurality of sheathing parts (24) which are arranged in pairs one after another in the longitudinal direction of the nacelle, wherein pairs of sheathing parts contiguous in the longitudinal direction are arranged to overlap such that each pair is arranged at one end inside of a first neighbouring pair, and at an opposite end outside of a second neighbouring pair, **characterised in that** the sheathing parts comprise a base plate (28) and two side walls (34, 36) arranged opposite to each other.

2. The sheathing according to claim 1, **characterised in that** two neighbouring pairs of sheathing parts are jointly fastened to a support frame (76) of the nacelle by fastening means (86).

3. The sheathing according to claim 2, **characterised in that** the sheathing part inboard in the overlapping region comprises a long hole extending in the longitudinal direction, or a recess (66) for receiving the fastening means (86).

4. A sheathing according to claim 2 or 3, **characterised in that** the sheathing part outboard in the overlapping region comprises a bore for receiving the fastening means (86).

5. The sheathing according to claim 1, **characterised in that** the base plate (28) is fastened to the support frame (76) of the nacelle in the overlapping region.

6. A sheathing according to claim 1 or 5, **characterised in that** the side walls of a pair of sheathing parts are connected to each other in a positive fit.

7. The sheathing according to claim 6, **characterised in that** the positively fitting connection of the side walls of a pair of sheathing parts (24, 26) extends across the entire length of the side parts and is formed such that the sheathing parts are connected so as to be movable against each other in the longitudinal direction.

8. A sheathing according to any one of claims 1 to 7, **characterised in that** each pair of sheathing parts consists of two equal sheathing halves.

9. The sheathing according to claim 8, **characterised in that** one side wall of a sheathing half has a recess (74), and the opposing side wall of the sheathing half has a projection (72') corresponding to the recess, such that the side walls are connected to each other by positive fit for one pair of sheathing halves.

10. A sheathing according to any one of claims 1 to 9, **characterised in that** the sheathing parts are likewise similar in form.

11. A sheathing according to any one of claims 1 to 9, **characterised in that** the sheathing parts are formed as identical parts.

12. A sheathing according to any one of claims 1 to 11, **characterised in that** the sheathing parts consist of a fibre-reinforced composite material.

## Revendications

1. Revêtement pour une nacelle d'une éolienne qui comporte une pluralité d'éléments de revêtement (24) qui sont arrangés par paires en enfilade dans la direction longitudinale de la nacelle, des paires d'éléments de revêtement avoisinantes dans la direction longitudinale étant arrangées en chevauchement de sorte que chaque paire est arrangée intérieur d'une première paire avoisinante dans une extrémité, et dans une extrémité opposée extérieur d'une deuxième paire avoisinante, **caractérisé en ce que** les éléments de revêtement comportent une plaque de base (28) et deux parois latérales (34, 36) arrangées à l'opposée l'une de l'autre.

2. Revêtement selon la revendication 1, **caractérisé en ce que** deux paires avoisinantes d'éléments de revêtement sont communément fixées sur un cadre de support (76) de la nacelle par des moyens de fixation (86).

3. Revêtement selon la revendication 2, **caractérisé en ce que** l'élément de revêtement à l'intérieur de la région de chevauchement comporte un trou oblong s'étendant dans la direction longitudinale, ou un évidement (66) pour recevoir les moyens de fixation (86).

4. Revêtement selon la revendication 2 ou 3, **caractérisé en ce que** l'élément de revêtement exterieur de la région de chevauchement comporte un perçage pour recevoir les moyens de fixation (86).

5. Revêtement selon la revendication 1, **caractérisé en ce que** la plaque de base (28) est fixée sur le cadre de support (76) de la nacelle dans la région de chevauchement.

6. Revêtement selon la revendication 1 ou 5, **caractérisé en ce que** les parois latérales d'une paire d'éléments de revêtement sont reliées l'une à l'autre par assemblage de forme.

7. Revêtement selon la revendication 6, **caractérisé en ce que** la connexion par assemblage de forme des parois latérales d'une paire d'éléments de revêtement (24, 26) s'étend le long de la longueur entière des pièces latérales et est formée tellement que les éléments de revêtement sont connectés de manière mobile l'un contre l'autre dans la direction longitudinale.

8. Revêtement selon l'une quelconque des revendications 1 to 7, **caractérisé en ce que** chaque paire d'éléments de revêtement consiste de deux moitiés de revêtement égales.

9. Revêtement selon la revendication 8, **caractérisé en ce que** une paroi latérale d'une moitié de revêtement comporte un évidement (74), et la paroi latérale opposée de la moitié de revêtement comporte une saillie (72') qui correspond à l'évidement, tellement que les parois latérales sont connectées l'une à l'autre par assemblage de forme pour une paire de moitiés de revêtement.

10. Revêtement selon l'une quelconque des revendications 1 à 9, **caractérisé en ce que** les éléments de revêtement sont de forme similairement identique.

11. Revêtement selon l'une quelconque des revendications 1 à 9, **caractérisé en ce que** les éléments de revêtement sont formés comme des pièces identiques.

12. Revêtement selon l'une quelconque des revendications 1 à 11, **caractérisé en ce que** les éléments de revêtement consistent d'un matériau composite renforcé de fibres.
